Europäisches Patentamt

**European Patent Office**

Office européen des brevets

(19)

(11) Publication number : **0 330 383 B1**

(12) **EUROPEAN PATENT SPECIFICATION**

(45) Date of publication of patent specification :
17.05.95 Bulletin 95/20

(51) Int. Cl.$^6$ : **G05B 19/42, E02F 9/20**

(21) Application number : **89301543.8**

(22) Date of filing : **17.02.89**

(54) **Articulated arm control.**

(30) Priority : **23.02.88 US 158731**

(43) Date of publication of application :
30.08.89 Bulletin 89/35

(45) Publication of the grant of the patent :
17.05.95 Bulletin 95/20

(84) Designated Contracting States :
**AT BE DE FR GB IT SE**

(56) References cited :
**WO-A-86/05606**
**FR-A- 1 454 364**
**FR-A- 1 497 311**
**IEEE TRANSACTIONS ON INDUSTRIAL ELEC-
TRONICS. vol. IE-29, no. 3, August 1982,NEW
YORK US pages 220 - 224; D. M. Alley: "Digital
Control of a Front-End Loader Linkage"**

(73) Proprietor : **THE UNIVERSITY OF BRITISH
COLUMBIA
2075 Wesbrook Mall
Vancouver, British Columbia V6T 1W5 (CA)**

(72) Inventor : **Lawrence, Peter Donald
3511 West 36th Avenue
Vancouver, B.C., V6S 1N6 (CA)**
Inventor : **Ross, Robert Vaughan
3919 East 52nd Avenue
Vancouver, B.C. V5S 1T7 (CA)**

(74) Representative : **Heath, Derek James et al
BROMHEAD & CO.
19 Buckingham Street
London WC2N 6EF (GB)**

## Description

The present invention relates to joint control of an arm formed by articulated interconnected segments. More particularly, the present invention relates to independent control of articulated arm segments for movement of a selected point adjacent to a free end of the arm independently in a selected one of the x, y or z directions.

## Background of the Present Invention

Various types of coordinated controls have been proposed and used for controlling construction equipment such as backhoes (see Canadian Patent No. 1,060,562 which issued on August 14, 1979 to Parquet et al) or for controlling the orientation of a hydraulic boom, for example, for positioning a rock drill for drilling (Canadian Patent No. 1,203,309 which issued on April 15, 1986 to Saulters et al).

In the Parquet Canadian patent 1,060,562, there is described a system for automatically setting the position of an implement with respect to the frame by a combination of position sensors and activators.

Canadian Patent No. 1,203,309 to Saulters et al provides a system for maintaining the free end of an arm carrying a drill at a constant orientation when transferring the drill from one position to another, i.e. from one bore hole to another while maintaining the same angle to the horizontal. In the Saulters et al patent, the concept is to select a second position and then move the boom to the second position while maintaining the proper orientation.

Other devices of maintaining orientation of equipment are known; for example, in farm machinery devices are available for maintaining the orientation and space relationship of a mower and pick-up system on a combine as shown for example in US-A-4,518,044 which issued on May 21, 1985 to Wiegardt.

It is also well known to program equipment such as a robot to perform the same task repetitively by programming coordinates and having the articulated arms of the robot move between the designated points defined by such coordinates or to move on a designated trajectory between points.

Other control techniques have been applied to construction equipment, see for example US-A-3,339,763 and US-A-3,414,146 which disclose hydraulic circuits that will function to automatically perform elected operations of a backhoe, or US-A-3,698,580 to Carlson which utilizes electric rather than hydraulic control to obtain similar operations.

Document FR-A-1 454 634 discloses a showel dredger in which an arm is controlled by a lever.

It is an aim of the present invention to provide a control system permitting independent control of movement of a free end of an arm composed of a plurality of articulated interconnected arm segments in a selected one of the x, y or z directions. It starts from what is described in FR-A-1 497 311, and the preamble of claim 1 is accordingly based on this citation, with the benefits of the present invention being achieved by the characterising features of claim 1.

Preferred features of the invention are disclosed in the sub-claims.

In one system in accordance with the present invention, a base is adapted to pivot around a first axis, a boom (first arm segment) is pivotally mounted on said base adjacent one end of said boom for movement on a second axis, said second axis being in a plane substantially. perpendicular to said first axis, a stick (second arm segment) is mounted on said boom adjacent the opposite end thereof from said one end for movement relative to said boom on a third axis, a manually-operated controller has means for generating independent x, y or z control signals which control a point adjacent the end of said stick remote from said boom in mutually perpendicular x, y or z direction, said x direction always being movement in a direction along a line substantially radial of said z axis between said z axis and said point, said y direction is movement around said z axis and said z direction is movement parallel to said z axis, computer means are coupled with said controller, and individual actuator means are provided for relatively moving the base, boom and stick on said first, second and third axes, the computer means actuating said individual actuator means to move said boom and stick relative to said second and third axis for movement of said point solely in the x direction or solely when said controller is manipulated to provide a signal solely for movement in the x direction or solely in said z direction respectively or relative to said first axis for movement of said point solely in the y direction when said controller is manipulated to provide a signal solely for movement in said y direction.

Preferably said second and third axes will be substantially parallel.

The operator's perspective relative to the point and the controller will be substantially constant by rotating the operator or his perspective by use of a camera so that movement of the control handle of said controller will result in a similar directional movement of said point relative to said operator's perspective.

If desired further segments or elements may be articulated to said free end of said stick for movement relative to further axes and said controller will be provided with independent means for individually controlling a movement of said further segments or elements relative to said further axes.

## Brief Description of the Drawings

Further features, objects and advantages will be evident from the following detailed description of the preferred embodiments of the present invention taken in conjunction with the accompanying drawings, in which:

Figure 1 is a schematic illustration of a pair of pivotably interconnected articulated arms.

Figure 2 is a schematic view similar to Figure 1 illustrating a pair of arms interconnected for sliding movement.

Figure 3 is a schematic representation illustrating movement of a point adjacent to the free end of an arm solely in the x-z plane in the x direction.

Figure 4 is a schematic similar to Figure 3 illustrating movement solely in the x-y plane in the y direction.

Figure 5 is a schematic similar to Figure 3 illustrating movement solely in the x-z plane in the z direction.

Figure 6 is an isometric representation of the x-x and z-z planes illustrating movement of a point in the x, y or z directions.

Figure 7 is an isometric illustration of one type of joystick control which may be used with the present invention.

Figure 8 shows a modification of control of Figure 7 providing a further independent control.

Figure 9 shows an alternative further independent control to that shown in Figure 8.

Figure 10 is a schematic illustration of an added element that may be controlled with the controllers of Figures 8 and 9.

Figure 11 illustrates a further modification of a controller of Figures 8 and 9 and adapted to control yet another degree of freedom.

Figure 12 illustrates a further degree of freedom that may be incorporated and controlled using the control of Figure 11.

Figure 13 illustrates the position of an operator relative to the controller and his view of the arm being controlled.

Figure 14 is a schematic illustration of inputs and outputs to and from the computer control.

## Description of the Preferred Embodiments

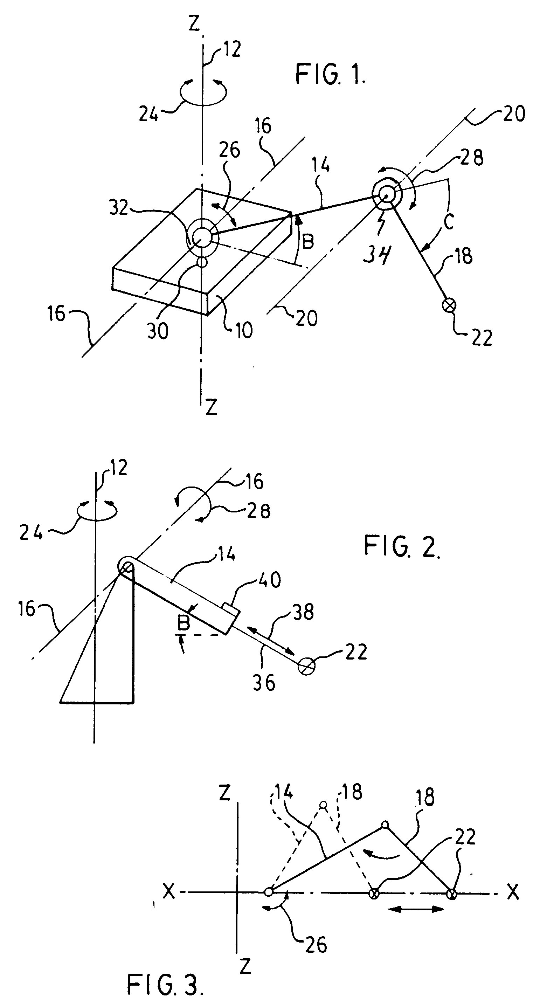

Figure 1 schematically illustrates by a simple line diagram an articulated arm arrangement that could comprise for example a backhoe having a base 10 mounted for rotation around a first axis 12 which in the illustrated arrangement is the z (vertical) axis. The base 10 has a first arm segment (boom) 14 mounted thereon for pivotal movement about an axis 16 that is in plane substantially perpendicular to the axis 12. A second arm segment (stick) 18 is pivoted to the end of the boom 14 for movement around an axis 20 substantially parallel to the axis 16. A reference point adjacent the free end of the stick 18 has been indicated at 22 by cross in a circle.

The base 10 is mounted on the frame (not shown) of the machine and is swung around the axis 12 relative to the frame of the machine by a suitable drive means as schematically illustrated by the arrow from 24; the boom 14 is pivoted around the axis 16 by a suitable drive means as schematically represented by the arrow 26; and similarly the stick 18 is pivoted on the axis 20 by a suitable drive means as indicated by the arrow 28. Angular displacement around the axis 12 defined herein as the z axis is measured by a suitable measuring or sensing device as indicated at 30 similarly the angular displacement of the boom 14 about the axis 16 (angle B) is measured by the sensor 32 and the angular displacement of the stick 18 relative to the boom 14 (angle C) is measured by the sensor 34.

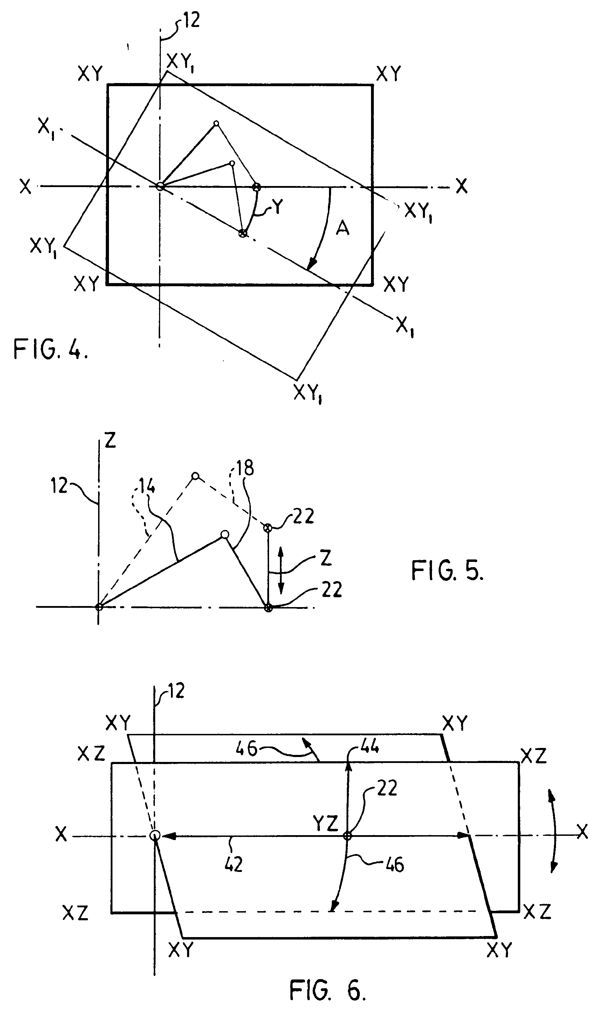

Angle A as shown in Figure 4 is a measure of the angular displacement around the axis 12 (Figure 4) relative to a set reference direction on the frame of the machine (normally fixed relative to the world but obviously moveable when the machine is relocated). Angle A is only required for remote control when the operator's perspective is not from on or adjacent to the z axis 12. Angle B defined as the angle between boom 14 and a plane perpendicular to the axis 12 (e.g. if axis 12 is vertical the angle of the longitudinal axis of the boom 14 to the horizontal) and the angle C is the angle between the longitudinal axis of the boom 14 and of the stick 18, i.e. angle at axis 20.

In the arrangement shown in Figure 2 the location of the pivotal axis 16 relative to the base 10 has been adjusted to position the axis higher in the z direction and the arm segment 18 has been replaced by a new arm segment 36 which instead of being pivoted to the free end of the arm segment 14 is slidable axially along the arm segment 14 by a suitable drive means as schematically illustrated by the arrow 38. The relative positions of the segments 14 and 36 of the Figure 2 embodiment is detected by a suitable sensor 40.

It will be apparent that relative movements of the base 10, first arm segment (boom) 14 and second arm segment (stick) 18, 36 are all individually controlled and monitored in both the Figure 1 and Figure 2 embodiments.

The manner in which the arms 14 and 18, 36 are intended to be controlled when practicing the present invention will now be explained in relation to Figures 3, 4 and 5.

The invention will be described with reference to the x, y and z directions of movement of point 22 which directions are mutually perpendicular. The x direction for point 22, however, is always toward and away from the z axis, thus when the unit is rotated around the z axis, i.e. moved in the y direction as perceived by an operator whose perspective rotates with the base 10, the x direction is changed from the initial x-x direction to the selected $x_1$-$x_1$ direction (Figure 4). This change in the x axis ensures that when an operator is operating from or has a perspective from the base 10 on or adjacent to the z axis movement directly to or away from the z axis (operator) is always the x direction. It will be apparent that if the arm segment 14 is pivotably mounted spaced slightly from the z axis as is normally the case the x direction will not be precisely toward the z axis but will actually be perpendicular to the axis of rotation of the arm 14 (axis 16) and in the line of the arms 14 and 18 (assuming they are aligned). This direction has been deemed for the purposes of the description essentially equivalent to movement of the point 22 along a line between point 22 and the z axis or in the x direction.

Considering Figure 3 if it is desired to move selected reference point 22 solely in the x direction as indicated by the line x-x in Figure 3 relative to an operator whose perspective will be as if he were located on the base 10 on or adjacent to the axis 12, it is necessary to adjust angles B and C, i.e. to adjust the pivoting of the boom 14 around axis 16 and of the stick 18 around axis 20 (assuming the Figure 1 embodiment). It will be apparent that by properly controlling the change of the angles it is possible to move the point 22 to travel solely along the line x-x.

Bearing in mind that the operator's perspective is always from a position on the base 10 or on adjacent to the z axis 12, rotation of the base 10 on axis 12 (movement in the y direction) will cause the x axis or x direction to change by the angle (angle A in Figure 4) through which the base 10 is rotated, i.e. so that the line $x_1$-$x_1$ becomes the x direction. In other words, the x direction though changing relative to the land or outside environment by angle A in Figure 4 does not change at all with respect to the operator when the point 22 is moved in the y direction.

If it is desired to move the selected point 22 solely in the y direction in a xy plane relative to the external environment (i.e. the direction substantially perpendicular to the x direction) as is indicated by the line y in Figure 4, such movement may be accomplished by holding each of the angles B and C constant and by operating the drive or actuator 24 to rotate the base 10 around the axis 12. Obviously the movement of the base 10 will result in an arcuate movement of the point 22 along the plane xy in the y direction. Because x direction has been defined as always being substantially along the line between the point 22 and the z axis the arcuate movement around the axis 12 redefine the x direction and therefore generate no movement in the x direction.

As indicated above the point 22 in moving along the line y in Figure 4 moves in a plane xy relative to the outside environment, however from the operator's perspective since his perspective will normally rotate with base 10 the x direction remains unchanged but is rotated as indicated by angle A relative to the world. The line $x_1$-$x_1$ still extends in the same direction relative to the operator (i.e. from the operator or z axis to point 22) is now pointing in a different direction relative to the world as indicated by line $x_1$-

$x^1$ and plane xy is now $xy_1$.

Figure 5 shows movement along the z direction i.e. in a vertical plane. To accomplish this both the angles B and C must be adjusted simultaneously to hold the point 22 on the line z-z in Figure 5.

It will be apparent if the Figure 2 embodiment were used instead of an adjustment of the angle C a suitable adjustment of the length of the stick 32 will be made, i.e. the amount of the stick 36 projects from the boom 14 will be adjusted instead of adjustment of the angle C.

The invention may be more clear from examination of Figure 6 in which a vertical z plane xz-xz; and a horizontal y plane xy-xy are illustrated.

The present invention permits movement of the point 22 which in Figure 6 has been illustrated as being a point on the xy and xz planes. The point 22 may selectively be moved for example along the line 42 (intersection of planes y and z) solely n the x direction (i.e. toward or away from the z axis) by properly adjusting the angles B and C or solely in vertical z direction, i.e. the illustrated xz plane as indicated by the line 44 or solely in the y direction along the arc 46 centered on axis 12. Movement in the y direction is relative to the earth, as above described, but not relative to the operator's perspective which is reoriented as the base 10 rotates so that the line x-x always remains essentially straight out from the operator the line between the point 22 and the z axis.

It is also possible to cause movement in all three directions simultaneously, i.e. the x, y and z directions to position the point 22 as will in many cases be used by simultaneously activating the controller (to be described below) to provide x, y and z direction signal.

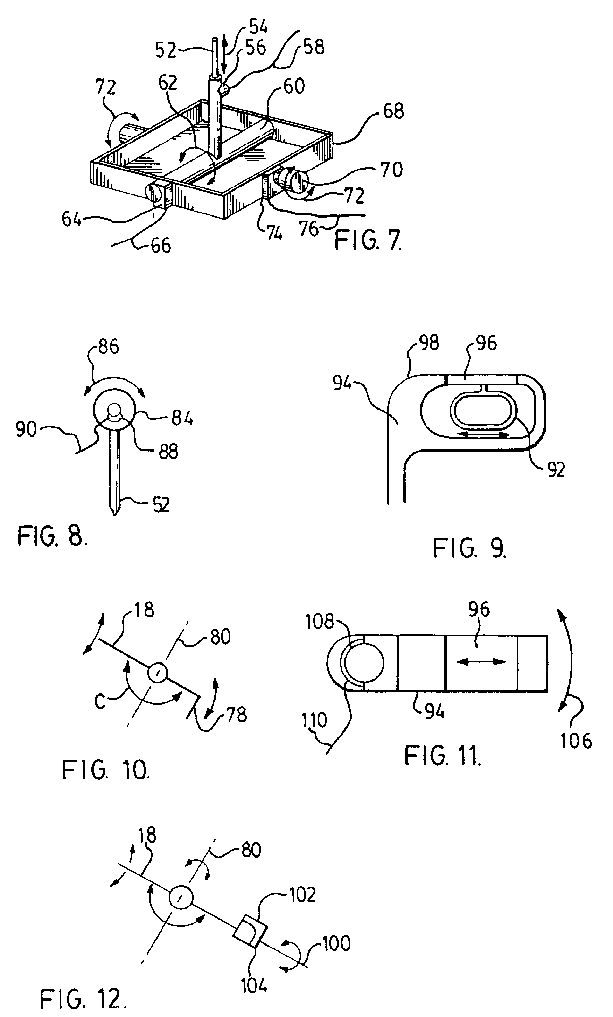

A simple manual controller that may be used in the present invention is illustrated in Figure 7. The illustrated joystick 50 has a handle portion 52 moveable axially as indicated by the arrow 54 which movement is sensed by the sensor 56 and fed to the computer control (to be described below) by a communication line 58.

Movement of the handle portion 52 in a vertical z direction as indicated by the arrow 54 preferably will be used to generate a signal for controlling movement of point 22 solely in the z direction, i.e. the z direction control.

Handle 52 is mounted on a rocker shaft 60 that may be rocked right and left relative to an operator as indicted by the arrow 62 assuming the operator is so positioned relative to joy stick 50 as normally would be the case and as will be descried below. This rocking is sensed by the sensor 64 and is transmitted to a computer control (to be described below) by a line 66. Such left right motion (y direction movement) preferably will be used to generate a signal controlling movement of point 22 solely in the y direction.

The rocker 60 is pivotally mounted in the frame 68 which in turn is rotatable on the axles 70 on an axis substantially perpendicular to the axis of rotation of the rocket 60 as indicated by the arrows 72. A suitable sensor 74 senses the angular displacement of the frame 68 and this information is fed to the computer control by a line 76. Movement around the axes 70 is in the fore and aft direction relative to the operator x direction and generates a signal to control movement of point 22 solely in the x direction.

The rocking motion (left right movement) applied to the rocker 60 will be used to control movement solely in the y direction, pivotal movement of the box frame 68 as indicted by the arrow 72 will cause movement of the point 22 substantially solely in the x direction and vertical movement of the handle 52 will cause movement of the point 22 solely in the z direction.

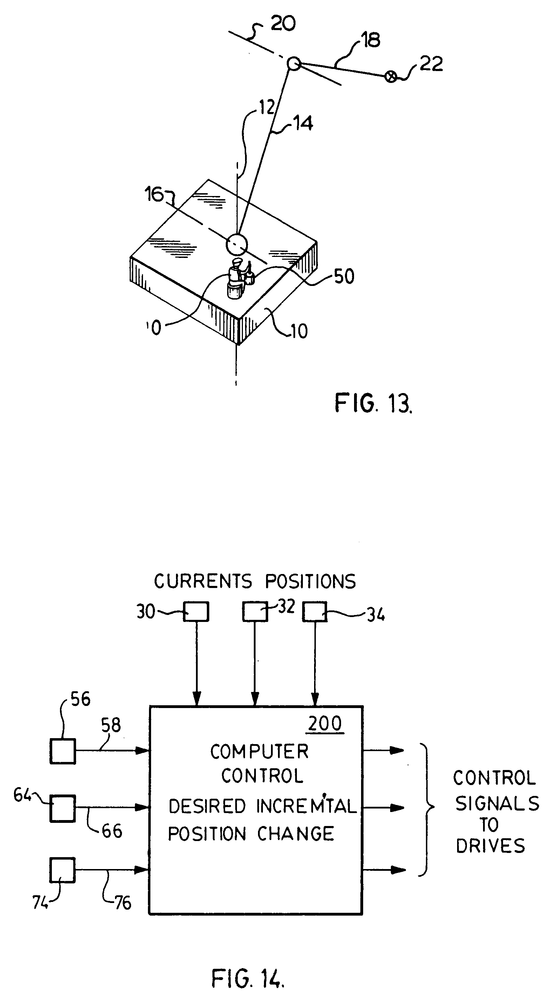

It is important to facilitate operation that the joystick 50 be positioned so that based on the operator's vision of the operation of the arm the direction of movement of the controller corresponds with the movement of the controlled point 22. For example if the joystick 50 is positioned in a cab on the base 10 it will be located relative to the operator 0 (Figure 13) so that the operator 0 can look through the cab window and the movement in the x, y and z directions will be in the same frame of reference as he sees it looking through the windshield. As above indicated the operator's perspective is constant with respect to the x direction and the joystick. Orientation of the joystick is constant with the operator so that x direction movement of the joystick is always substantially in line with the x direction of movement of point 22 from the operator's perspective.

Alternatively a camera not shown may be mounted on the base 10 in the appropriate location and the joystick 50 properly positioned relative to a monitor so that the image presented on the monitor will essentially be equivalent to what would be seen by an operator positioned on the base or platform 10.

The separate x, y and z direction control is also applicable and advantageous even if not aligned as above described with the operator's perspective.

The above description has been directed to equipment having three degrees of freedom. If used on a backhoe a suitable bucket may be positioned pivotally connected to the stick 18 or 36 in place of the point 22 as shown schematically at 78 in Figure 10. The bucket 78 is illustrated as mounted to pivot on the axis 80 which is substantially parallel to the axis 16. A suitable sensor detects an angle between the stick 18 and a selected line on the bucket 78.

When a bucket such as the bucket 78 or equivalent is applied to the free end of stick 18 or 36 a modified controller such as that shown in Figure 8 may be provided. In this arrangement a knob in the form of the cylinder 84 is rotatably mounted at the top of the handle 52 for rotation as indicted by the arrow 86 on an axis substantially perpendicular to the z direction of movement of the handle 52 is on a y axis. A suitable sensor 88 senses the angular displacement of the knob 84 and feeds this information by a line 90 to the computer control and used to control the attitude of the bucket 78 preferably to axis 12.

In Figure 9 an alternate system is shown wherein a trigger 92 is slidable (it would equally well be rotatably mounted) in a hand grip 94 mounted at the top handle 52. The position of the trigger 92 is monitored by a sensor 96 and this information fed to the computer control by a line such as the line 98 equivalent to line 90 in the Figure 8 embodiment. The trigger 92 is an alternative to the knob 84 and may have essentially the same function.

In Figure 12 another degree of freedom is indicated by the axis 100 which is perpendicular to the axis 80. Angular displacement of the axis 100 is monitored by the sensor 102 and this information is fed to the computer by a line 104.

The further degree of freedom shown in Figure 12 may be controlled for example by the arrangement shown in Figure 9 which permits the hand grip 94 to swing around the axis which is illustrated as parallel to the z direction movement of the shaft 52 as indicted by the arrow 106. This swinging action may be monitored by a sensor 108 sensing the angular displacement of the handle 94 and this information sent to the computer control by the line 110.

If desired the handle grip 94 may replace the cylinder 84, i.e. grip 94 be mounted for movement around the axis perpendicular to the z direction movement of handle 52, i.e. y axis or if a further degree of freedom is desired a further axis may be provided preferably on the z axis so that the grip 94 may pivot relative to the handle 52 on an axis parallel to the z direction of movement of handle 2 and/or on an axis perpendicular to the z direction of movement and these movements of the hand grip 94 used to control the degrees of freedom of an arm.

The computer control referred to above is illustrated at 200 in Figure 14 has inputs from the sensors 56, 64 and 74 of controller 50 and further inputs (assuming the Figure 1 embodiment) from the sensors 30, 32, and 34 which indicate the angular displacement on the axes 12, 16 and 20 respectively.

The changes signalled by the sensors 56, 64 and 74 are fed to the computer 200 which then signals the various operating mechanisms 24, 26 and 28 causing motions to adjust the angles A and B or to rotate around axis 12 accordingly.

The particular control strategy by which angles A and B and rotation around axis 12 are adjusted can be varied. For example it might be a positional control. However, the preferred manner of control is based on a velocity control, velocity in any selected direction being set by the degree of displacement of the controller 50, i.e. of the x, y or z direction controls so that if one of the sensors 56, 64 or 74 is not sending a signal, i.e. that portion of the controller 50 is in neutral position no movement of the point 22 occurs in the direction controlled by that sensor. If desired the control function may be changed for different functions or locations of point 22, e.g. from velocity to positional control or vice versa depending on the task or position of point 22.

It is preferred that the controller be set to control the change in space of the point and not the angular change when rotating around the z axis so that for a given displacement of the control in the y direction the angular velocity is adjusted to compensate for the extension of the point 22 from the z axis, i.e. in the x direction.

When the system is used on, for example, a back hoe, it may be desirable to hold the bucket at the free end of the arm 18, 36 at a particular orientation to the horizontal as the boom and stick are moved, this may also be easily accomplished by suitable control of the angle D (Figure 10).

The computer control 200 preferably uses inverse kinematics to adjust the position of the arms 14, 18 (or 36) and base 10 in accordance with the input created by the manipulation of the controller 50.

The following is a description of the calculations of the various angles A, B and C referred to above wherein movement is from a first position designated by the subscript old. x is the coordinate in the x direction, z is the coordinate in the z direction and $\Delta x$, $\Delta y$, $\Delta z$ are increments in position requested by the operator at the present system clock time.

$$x = \Delta x + x_{old}$$
$$z = \Delta z + z_{old}$$
$$D = + \sqrt{x^2 + z^2}$$
$$A = \frac{\Delta y}{x} + A_{old}$$
$$B = \tan^{-1}\left(\frac{z}{x}\right) + \cos^{-1}\left[\frac{D^2 + LB^2 - LS^2}{2.D.LB}\right]$$
$$C = \cos^{-1}\left[\frac{D^2 - LB^2 - LS^2}{2.LB.LS}\right]$$

where

LB = length of boom 14 between axes 16 and 20

LS = length of stick 18 between axes 20 and point 22

It will be noted that, to move in the y direction, a change in angle A and the new angle A is defined above as

$$A = \frac{\Delta y}{x} + A_{old}$$

The required change in angle A to obtain the commanded movement $\Delta y$ in a given time interval (velocity) carries in dependence on the distance (x) from the end point 22 to the z axis. Dividing the commanded movement $\Delta y$ by the distance x adjusts the change in angle A so that the commanded change in y ($\Delta y$) is obtained and ensures that the velocity of the end point 22 for a given command movement $\Delta y$ is independent of the distance between the end point 22 and the z axis.

## Claims

1. A system for controlling the movement of an arm formed by a plurality of articulated interconnected arm segments (10, 14, 18) mounted for movement on at least three separate axes (12, 16, 20) one (12) of which comprises a z axis to move a point (22) located substantially adjacent to the free end of the arm selectively in substantially mutually perpendicular x, y and z directions, the x direction always being along a straight line extending substantially in the direction between said point and said z axis, the y direction being substantially along any selected arc of fixed radius around said z axis, and the z direction being substantially parallel to said z axis, the system also having a manually-operated controller (50), a computer control means (200), and independent means (30, 26, 28) for moving the arm segments (10, 14, 18) on each of said axes (12, 16, 20), the controller (50) having x direction control means (79), y direction control means (99) and z direction control means (56) adapted to provide an independent x, y and z signal respectively to the computer control means (200) with each signal varying in accordance with displacement of its respective control means, and the computer control means (200) controlling said means (30, 26, 28) for moving the arm segments (10, 14, 18) to move said point (24) in solely a selected one of said x, y and z directions when the controller (50) is activated to provide a signal to the computer control means (200) for movement in solely the selected one of said x, y and z directions, respectively, characterised in that the computer control means (200) control said means (30, 26, 28) for moving the arm segments (10, 14, 18) to move said point (24) in said x, y or z direction at the same velocity for a given displacement of said x, y or z direction control means respectively, regardless of the position of said point (24) relative to said z axis, the controller (50) being positioned so that the direction of displacement of said independent x and y direction control means is maintained substantially in the same respective x and y direction as the direction of movement of said point (24) from the perspective of an operator operating the controller (50).

2. A system as defined in claim 1, wherein an operator's position and the controller (50) are in fixed relationship with respect to the x direction of movement of said point (24).

3. A system as defined in claim 1 or claim 2, wherein the controller (50) includes a joy stick that provides each of said x, y and z signals when moved respectively in said x, y or z directions of movement of said point (24).

4. A system as defined in any one of claims 1-3, wherein the arm includes a base (10) rotatable around said z axis (12) by a first actuator means, a first arm segment (14) pivotably mounted on said base for pivotal movement about a second axis (16) by a second actuator means (26), the second axis (16) being in a plane substantially perpendicular to said z axis (12), and a second arm segment (18, 36) mounted at the end of the first arm segment (14) remote from the base (10), the second arm segment (18) being mounted on the first arm segment (14) for movement relative to the first arm segment (14) on a third axis (20, 36) by a third actuator means (28).

5. A system as defined in claim 4, wherein the controller (50) rotates with the base (10).

6. A system as defined in any one of claims 1-5, wherein the second arm segment (18) is mounted for movement relative to the first arm segment (19) about the third axis (20).

**Patentansprüche**

1. System zum Steuern der Bewegung eines Armes, der aus einer Vielzahl gelenkiger, miteinander verbundener Armsegmente (10, 14, 18) gebildet ist, die für Bewegung bezüglich wenigstens drei separater Achsen (12, 16, 20) befestigt sind, von denen eine (12) eine z-Achse für die Bewegung eines Punktes (22), der sich im wesentlichen nahe dem freien Ende des Armes befindet, selektiv in im wesentlichen gegeneinander senkrechten x-, y- und z-Richtungen aufweist, wobei die x-Richtung immer entlang einer geraden Linie verläuft, die sich im wesentlichen in die Richtung zwischen dem Punkt und der z-Achse erstreckt, wobei die y-Richtung im wesentlichen entlang eines beliebig ausgewählten Bogens bzw. bestimmten Radius um die z-Achse verläuft, und wobei die z-Richtung im wesentlichen parallel zur z-Achse verläuft, wobei das System auch eine manuell betreibbare Steuerung (50), eine Rechnersteuerung (200) sowie unabhängige Einrichtungen (30, 26, 28) für die Bewegung der Armsegmente (10, 14, 18) bezüglich jeder der Achsen (12, 16, 20) aufweist, wobei die Steuerung (50) eine Steuereinrichtung (79) für die x-Richtung, eine Steuereinrichtung (99) für die y-Richtung und eine Steuereinrichtung (56) für die z-Richtung aufweist, mit deren Hilfe ein unabhängiges x-, y- und z-Signal jeweils zur Rechnersteuerung (200) übertragen werden soll, wobei jedes Signal entsprechend der Verschiebung seiner jeweiligen Steuereinrichtung variiert, und wobei die Rechnersteuerung (200) die Einrichtungen (30, 26, 28) für die Bewegung der Armsegmente (10, 14, 18) steuert, daß sie den Punkt (24) nur in eine bestimmte der x-, y- und z-Richtungen bewegt, wenn die Steuerung (50) aktiviert ist, um ein Signal an die Rechnersteuerung (200) für die Bewegung nur in die bestimmte der x-, y- und z-Richtungen abzugeben, dadurch gekennzeichnet, daß die Rechnersteuerung (200) die Einrichtungen (30, 26, 28) für die Bewegung der Armsegmente (10, 14, 18) steuert, daß der Punkt (24) in die x-, y- oder z-Richtung mit der gleichen Geschwindigkeit für eine bestimmte Verschiebung der Steuereinrichtungen für die x-, y- oder z-Richtung jeweils bewegt wird, ungeachtet der Position des Punktes (24) bezogen auf die z-Achse, wobei die Steuerung (50) so angeordnet ist, daß die Verschiebungsrichtung der unabhängigen Steuereinrichtungen für die x- und y-Richtung in der gleichen jeweiligen x- und y-Richtung wie die Bewegungsrichtung des Punktes (24) aus der Perspektive einer die Steuerung (50) bedienenden Person im wesentlichen aufrechterhalten wird.

2. System nach Anspruch 1, dadurch gekennzeichnet, daß die Position eines Bedieners und die Steuerung (50) in festem Verhältnis bezogen auf die x-Richtung der Bewegung des Punktes (24) stehen.

3. System nach Anspruch 1 oder 2, dadurch gekennzeichnet, daß die Steuerung (50) einen Joystick aufweist, der jedes der x-, y- und z-Signale liefert, wenn er jeweils in die x-, y- oder z-Richtung der Bewegung des Punktes (24) bewegt wird.

4. System nach einem der Ansprüche 1-3. dadurch gekennzeichnet, daß der Arm einen Sockel (10), der um die z-Achse (12) über eine erste Betätigungseinrichtung gedreht werden kann, ein erstes Armsegment (14), das drehbar am Sockel für die Drehbewegung um eine zweite Achse (16) über eine zweite Betätigungseinrichtung (26) befestigt ist, wobei die zweite Achse (16) sich in einer zur z-Achse (12) im wesentlichen senkrechten Ebene befindet, und ein zweites Armsegment (18, 36), das am Ende des ersten Armsegments (14) im Abstand zum Sockel (10) befestigt ist, aufweist wobei das zweite Armsegment (18) am ersten Armsegment (14) für die Bewegung bezogen auf das erste Armsegment (14) bezüglich einer dritten Achse (20, 36) über eine dritte Betätigungseinrichtung (28) befestigt ist.

5. System nach Anspruch 4, dadurch gekennzeichnet, daß sich die Steuerung (50) mit dem Sockel (10) dreht.

6. System nach einem der Ansprüche 1-5, dadurch gekennzeichnet, daß das zweite Armsegment (18) für die Bewegung bezogen auf das erste Armsegment (19) um die dritte Achse (20) befestigt ist.

## Revendications

1. Système pour commander le déplacement d'un bras constitué de plusieurs tronçons de bras (10, 14, 18) reliés mutuellement en étant montés articulés pour se déplacer sur au moins trois axes séparés (12, 16, 20) dont l'un (12) constitue l'axe z pour déplacer un point (22) situé pratiquement adjacent à l'extrémité libre du bras de manière sélective dans des directions x, y et z pratiquement mutuellement perpendiculaires, la direction x étant toujours située le long d'une ligne droite s'étendant pratiquement dans la direction définie entre ledit point et ledit axe z, la direction y étant pratiquement le long de tout arc choisi et ayant un rayon fixé autour dudit axe z, et la direction z étant pratiquement parallèle audit axe z, le système ayant aussi un dispositif de commande (50) actionné manuellement, des moyens (200) de commande par ordinateur, et des moyens indépendants (30, 26, 28) pour déplacer les tronçons de bras (10, 14, 18) sur chacun desdits axes (12, 16, 20), le dispositif de commande (50) ayant des moyens de commande (79) dans la direction x, des moyens de commande (99) dans la direction y et des moyens de commande (56) dans la direction z adaptés pour envoyer un signal indépendant x, y et z respectivement vers les moyens de commande par ordinateur (200), chaque signal variant en fonction du déplacement de ces moyens de commande respectifs, et les moyens de commande par ordinateur (200) commandent lesdits moyens (30, 26, 28) pour déplacer les tronçons de bras (10, 14, 18) pour déplacer ledit point (22) seulement dans une direction choisie parmi lesdites directions x, y et z lorsque le dispositif de commande (50) est activé pour envoyer un signal aux moyens de commande par ordinateur (200) pour déplacer seulement dans une direction choisie parmi lesdites directions x, y et z, respectivement, caractérisé en ce que les moyens de commande par ordinateur (200) commandent lesdits moyens (30, 26, 28) pour déplacer les tronçons de bras (10, 14, 18) pour déplacer ledit point (22) dans ladite direction x, y ou z avec la même vitesse pour un déplacement donné respectivement desdits moyens de commande dans la direction x, y ou z, quelle que soit la position dudit point (22) par rapport audit axe z, le dispositif de commande (50) étant positionné de telle sorte que la direction de déplacement desdits moyens indépendants de commande dans la direction x et y soit maintenue pratiquement dans la même direction respective x et y que la direction de déplacement dudit point (22) à partir de la perspective d'un opérateur actionnant ledit dispositif de commande (50).

2. Système selon la revendication 1, dans lequel la position de l'opérateur et du dispositif de commande (50) ont une relation fixe par rapport à la direction x de déplacement dudit point (22).

3. Système selon la revendication 1 ou 2, dans lequel le dispositif de commande (50) comporte une manette qui fournit chacun desdits signaux x, y et z lorsqu'elle est déplacée respectivement dans lesdites directions x, y ou z de déplacement dudit point (22).

4. Système selon l'une quelconque des revendications 1 à 3, dans lequel le bras comporte une base (10) pouvant tourner autour dudit axe z (12) par l'intermédiaire de premiers moyens formant actionneur, un premier tronçon de bras (14) étant monté de manière pivotante sur ladite base pour avoir un mouvement pivotant autour d'un deuxième axe (16) par l'intermédiaire de deuxièmes moyens formant actionneur (26), le deuxième axe (16) étant dans un plan pratiquement perpendiculaire audit axe z (12), et un second tronçon de bras (18, 36) monté au niveau de l'extrémité du premier tronçon de bras (14) éloignée par rapport à la base (10), le second tronçon de bras (18) étant monté sur le premier tronçon de bras (14) pour se déplacer par rapport au premier tronçon de bras (14) sur un troisième axe (20, 36) par l'intermédiaire de troisièmes moyens formant actionneur (28).

5. Système selon la revendication 4, dans lequel le dispositif de commande (50) tourne avec la base (10).

6. Système selon l'une quelconque des revendications 1 à 5, dans lequel le second tronçon de bras (18) est monté pour se déplacer par rapport au premier tronçon de bras (19) autour du troisième axe (20).

FIG. 1.

FIG. 2.

FIG. 3.

FIG. 4.

FIG. 5.

FIG. 6.

FIG. 7.

FIG. 8.

FIG. 9.

FIG. 10.

FIG. 11.

FIG. 12.

FIG. 13.

CURRENTS POSITIONS

30 —□  □—32  □ —34

56

58

64

66

74 —□  —76

┌──────────────────────┐
│                 200  │
│  COMPUTER            │
│  CONTROL             │
│                      │
│  DESIRED INCREMTAL   │
│  POSITION CHANGE     │
└──────────────────────┘

CONTROL
SIGNALS
TO
DRIVES

FIG. 14.